# EUROPÄISCHE PATENTSCHRIFT

(11) **EP 3 003 829 B1**
(45) Veröffentlichungstag und Bekanntmachung des Hinweises auf die Patenterteilung: **01.08.2018**
(21) Anmeldenummer: 14725983.2
(22) Anmeldetag: 15.05.2014
(51) Int. Cl.: B62D 21/11, B62D 27/02, B62D 29/04, B60K 1/00, H01M 2/10, B60K 1/04

(54) **ANORDNUNG EINES HINTERACHSMODULS AN EINEM FAHRZEUG-AUFBAU SOWIE EIN HINTERACHSMODUL FÜR EINE SOLCHE ANORDNUNG UND EIN ZWEIACHSIGES, ZWEISPURIGES, ZUMINDEST TEILWEISE MITTELS EINES ELEKTROMOTORS ANTREIBBARES FAHRZEUG MIT EINER SOLCHEN ANORDNUNG**
ARRANGEMENT OF A REAR AXLE MODULE ON A VEHICLE BODY, AND A REAR AXLE MODULE FOR SUCH AN ARRANGEMENT AND A TWO-AXLE, TWO-TRACK VEHICLE WHICH IS AT LEAST PARTIALLY DRIVEABLE BY MEANS OF AN ELECTRIC MOTOR AND HAS SUCH AN ARRANGEMENT
GENCEMENT D'UN MODULE D'ESSIEU ARRIÈRE SUR UNE CARROSSERIE DE VÉHICULE AUTOMOBILE AINSI QU'UN MODULE D'ESSIEU ARRIÈRE POUR UN TEL AGENCEMENT ET VÉHICULE AUTOMOBILE À DEUX ESSIEUX ET À DEUX VOIES ÉQUIPÉ D'UN TEL AGENCEMENT ET POUVANT AU MOINS PARTIELLEMENT ÊTRE ENTRAÎNÉ ÉLECTRIQUEMENT PAR UN MOTEUR ÉLECTRIQUE

(30) Priorität: 06.06.2013 DE 102013210576
(43) Veröffentlichungstag der Anmeldung: 13.04.2016
(73) Patentinhaber: Bayerische Motoren Werke Aktiengesellschaft, 80809 München (DE)
(72) Erfinder: GLESER, Andreas, 82194 Groebenzell (DE); KÜHLEWIND, Steffen, 82229 Seefeld (DE); STENZENBERGER, Alfred, 86681 Fuenfstetten (DE); WITTA, Lars, 80639 München (DE)
(74) Vertreter: Schmidt, Günter H. H.
(86) Internationale Anmeldenummer: PCT/EP2014/059997
(87) Internationale Veröffentlichungsnummer: WO 2014/195104

(56) Entgegenhaltungen:
- WO-A1-2012/065787
- DE-A1-102011 012 249
- DE-A1-102011 054 580
- DE-A1-102011 081 836
- DE-A1-102012 011 797
- US-A1- 2006 289 224

## Beschreibung

Die Erfindung betrifft eine Anordnung eines Hinterachsmoduls an einem Fahrzeug-Aufbau für ein zumindest teilweise mittels eines Elektromotors elektrisch antreibbares, zweiachsiges, zweispuriges Fahrzeug, wobei das Hinterachsmodul einen zur Befestigung radführender Lenker einer Hinterachse ausgebildeten Hinterachsträger und ein Gehäuse zur Aufnahme von Komponenten zur Bereitstellung elektrischer Energie aufweist, wobei das Gehäuse bezogen auf einen am Fahrzeug-Aufbau angeordneten Zustand in einem vorderen Bereich des Hinterachsmoduls angeordnet ist und am Hinterachsträger befestigt ist oder einen Bestandteil des Hinterachsträgers bildet, und wobei das Hinterachsmodul über zwei, in Bezug auf die Fahrtrichtung hintere, in einem hinteren Endbereich des Hinterachsmoduls angeordnete Hinterachsträgerlager, und zwei mittlere, in einem mittleren Bereich des Hinterachsmoduls angeordnete Hinterachsträgerlager von unten am Fahrzeug-Aufbau angebunden ist.

Ferner betrifft die Erfindung ein Hinterachsmodul für eine solche Anordnung sowie ein zweiachsiges, zweispuriges, zumindest teilweise mittels eines Elektromotors antreibbares Fahrzeug mit einer solchen Anordnung.

Die Bereitstellung einer ausreichenden Menge elektrischer Energie für ein zweiachsiges, zweispuriges und zumindest teilweise mittels eines Elektromotors antreibbares Fahrzeug stellt zum einen hinsichtlich des benötigten Bauraums und zum anderen aufgrund des hohen zusätzlichen Gewichts der zur Erzeugung der elektrischen Energie erforderlichen Komponenten eine große Herausforderung dar. Insbesondere entsteht ein Zielkonflikt hinsichtlich Komfort, Akustik und Fahrdynamik. Für eine den Anforderungen gerecht werdende Umsetzung eines elektrischen Antriebs in oben genannten Fahrzeugen, d.h. in Hybridfahrzeugen (teilweise mittels eines Elektromotors antreibbar) oder in reinen Elektrofahrzeugen (nur mittels eines Elektromotors antreibbar), ist es erforderlich, die hierfür benötigten elektrischen Komponenten, d.h. die Speicher zur Erzeugung der elektrischen Energie sowie die zugehörige Leistungselektronik, möglichst gewichtssparend bzw. gewichtsoptimiert und bauraumsparend bzw. bauraumoptimiert im Fahrzeug unterzubringen bzw. am Fahrzeug-Aufbau anzuordnen.

Aus dem Stand der Technik, beispielsweise aus der DE 10 2011 081 836 A1 oder der WO 2012/065787 A1 ist bekannt, die Komponenten zur Erzeugung elektrischer Energie in einem am Hinterachsträger angeordneten Gehäuse bzw. einem den Hinterachsträger bildenden Gehäuse anzuordnen, wobei üblicherweise der Hinterachsträger und das Gehäuse zusammen mit anderen Komponenten, wie beispielsweise dem Hinterachsgetriebe oder den radführenden Lenkern der Hinterachse, zu einem sogenannten Hinterachsmodul vormontiert werden und anschließend als Einheit am Fahrzeug-Aufbau bzw. einer Fahrzeug-Karosserie befestigt werden. Das Hinterachsmodul wird dabei aus Akustik- und Komfortgründen bevorzugt über vier im Hinterachsträger aufgenommene Hinterachsträgerlager, die als Gummilager oder hydraulisch bedämpfte Lager ausgebildet sind, am Fahrzeug-Aufbau befestigt.

Aufgabe der vorliegenden Erfindung ist es somit, eine verbesserte Anordnung eines Hinterachsmoduls an einem Fahrzeug-Aufbau für ein zumindest teilweise mittels eines Elektromotors elektrisch antreibbares, zweiachsiges, zweispuriges Fahrzeug bereitzustellen, mit welcher der vorgenannte Zielkonflikt besser gelöst werden kann.

Gelöst wird diese Aufgabe durch eine Anordnung eines Hinterachsmoduls an einem Fahrzeug-Aufbau mit den Merkmalen von Anspruch 1 sowie durch ein Hinterachsmodul mit den Merkmalen von Anspruch 7 und durch ein zweiachsiges, zweispuriges, zumindest teilweise mittels eines Elektromotors elektrisch antreibbares Fahrzeug mit den Merkmalen von Anspruch 8. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Eine erfindungsgemäße Anordnung ist dadurch gekennzeichnet, dass das Hinterachsmodul zusätzlich über zwei vordere, im vorderen Bereich des Hinterachsmoduls am Gehäuse angeordnete Lager am Fahrzeug-Aufbau angebunden ist.

Ein erfindungsgemäßes Hinterachsmodul ist entsprechend dadurch gekennzeichnet, dass es zusätzlich über zwei vordere, im vorderen Bereich des Hinterachsmoduls am Gehäuse angeordnete Lager am Fahrzeug-Aufbau angebunden bzw. mit diesem verbunden werden kann, und ein erfindungsgemäßes zweiachsiges, zweispuriges, zumindest teilweise mittels eines Elektromotors elektrisch antreibbares Fahrzeug mit einem Hinterachsmodul ist dadurch gekennzeichnet, dass es ein erfindungsgemäßes Hinterachsmodul aufweist, welches erfindungsgemäß am Fahrzeug angeordnet ist.

Unter einem Hinterachsmodul wird dabei im Folgenden eine vormontierte Einheit von Bauteilen bzw. Komponenten verstanden, welche im Montageprozess als Einheit mit dem Fahrzeug-Aufbau bzw. einer Fahrzeug-Karosserie verbunden wird.

Der Hinterachsträger ist dabei bevorzugt ein Hilfsrahmen bzw. rahmenartig ausgebildet und, bezogen auf einen am Fahrzeug-Aufbau bzw. der Fahrzeug-Karosserie angeordneten Zustand, in einem hinteren Bereich des Hinterachsmoduls angeordnet, das heißt bei Vorwärtsfahrt des Fahrzeugs betrachtet ist der Hinterachsträger in Fahrzeuglängsrichtung zum Fahrzeug-Heck hin angeordnet, wobei der Hinterachsträger vorzugsweise den hinteren Bereich des Hinterachsmoduls bildet. Vorzugsweise weist der Hinterachsträger zwei, sich im Wesentlichen quer zur Fahrzeuglängsrichtung erstreckende Querträger auf, einen vorderen und einen hinteren, welche weiter bevorzugt durch zwei sich im Wesentlichen in Fahrzeuglängsrichtung erstreckende Längsträger miteinander verbunden sind. An den Querträgern selbst sind bevorzugt Lageraufnahmen für ein Hinterachsgetriebe vorgesehen, wobei vorzugsweise eine 3-Punkt-Lagerung vorgesehen ist, mit zwei Lageraufnahmen im vorderen Querträger des Hinterachsträgers und einer Lageraufnahme im hinteren Querträger, wobei das Hinterachsgetriebe aus Akustik- und Komfortgründen bevorzugt mittels elastischer Gummilager an den Hinterachsträger angebunden werden kann. Es kann aber auch ein Elektromotor am Hinterachsträger befestigt werden. Zur Befestigung radführender Lenker sind vorzugsweise Lagerlaschen oder dergleichen am Hinterachsträger vorgesehen.

Das Gehäuse zur Aufnahme von Komponenten zur Bereitstellung elektrischer Energie ist dabei bezogen auf einen am Fahrzeug-Aufbau bzw. einen an der Fahrzeug-Karosserie angeordneten Zustand in einem vorderen Bereich des Hinterachsmoduls angeordnet, in Fahrzeuglängsrichtung bei Vorwärtsfahrt des Fahrzeugs betrachtet, d.h. in Richtung Fahrzeug-Front, und bildet vorzugsweise mit einem vorderen Teil den vorderen Bereich des Hinterachsmoduls. Der hintere Teil des Gehäuses ist bevorzugt mit dem Hinterachsträger verbunden. Der hintere Gehäuse-Teil kann aber auch einen Teil des Hinterachsträgers bilden, beispielsweise den vorderen Querträger, wodurch eine besonders vorteilhafte Ausnutzung des zur Verfügung stehenden Bauraums ermöglicht wird.

Das Gehäuse ist bevorzugt zumindest teilweise ein Guss-Gehäuse und insbesondere derart ausgebildet, dass darin aufgenommene Komponenten vor Umgebungseinflüssen geschützt werden können, vor allem vor Feuchtigkeit. Dabei kann das Gehäuse auch mehrere Einzel-Gehäuse umfassen und/oder aus mehreren Bauteilen zusammengesetzt sein. Weiter bevorzugt ist das Gehäuse ebenfalls zur Anbindung radführender Lenker ausgebildet.

Komponenten zur Speicherung von elektrischer Energie, die im Gehäuse aufgenommen werden können, sind beispielsweise Hochvolt-Speicherzellen bzw. jeweils zu Hochvoltspeicher-Modulen zusammengefasste Hochvoltspeicher-Zellen, das heißt Komponenten, die eine Spannung von 200 V bis 400 V bereitstellen. Es können aber auch Brennstoffzellen mit zugeordneten Akkumulatoren darin aufgenommen werden oder herkömmliche Akkumulatoren, beispielsweise eine oder mehrere herkömmliche 12V-Fahrzeugbatterien. Dabei ist es vorteilhaft, wenn die zugehörige Leistungselektronik ebenfalls im Gehäuse aufgenommen wird.

Zur Anbindung des Hinterachsmoduls am Fahrzeug-Aufbau sind unter anderem im hinteren Endbereich des Hinterachsmoduls zwei Hinterachsträgerlager vorgesehen. Diese sind bevorzugt in den hinteren Eckbereichen des Hinterachsträgers angeordnet, beispielsweise in den Endbereichen, insbesondere an den Enden, der Querträger oder der Längsträger des Hinterachsträgers. Der Hinterachsträger kann aber auch schräg nach hinten außen ragende Tragarme aufweisen an deren äußeren Enden dann die Hinterachsträgerlager angeordnet sind.

Des Weiteren sind im mittleren Bereich des Hinterachsmoduls zwei Hinterachsträgerlager zur Anbindung des Hinterachsmoduls am Fahrzeug-Aufbau vorgesehen. Dabei ist der mittlere Bereich nicht zwingend ein um die in Fahrzeuglängsrichtung liegende geometrische Mitte angeordneter Bereich, sondern ein Bereich, der in Fahrzeuglängsrichtung zwischen dem vorderen Bereich und dem hinteren Bereich liegt. Insbesondere ist der mittlere Bereich ein Verbindungsbereich, in welchem das im vorderen Bereich angeordnete bzw. das den vorderen Bereich bildende Gehäuse mit dem im hinteren Bereich angeordneten bzw. dem den hinteren Bereich bildenden Hinterachsträger verbunden ist.

Als besonders vorteilhaft hat sich die Verwendung hydraulisch bedämpfter hinterer und mittlerer Hinterachsträgerlager, insbesondere in Fahrzeuglängsrichtung hydraulisch bedämpfter hinterer und mittlerer Hinterachsträgerlager erwiesen.

Erfindungsgemäß sind zusätzlich zwei vordere, im vorderen Bereich des Hinterachsmoduls am Gehäuse angeordnete Lager vorgesehen, über die das Hinterachsmodul am Fahrzeug-Aufbau angebunden ist. Dadurch kann das Schwingverhalten des Hinterachsmoduls bzw. des Fahrzeugs, insbesondere in Bezug auf Nickschwingungen, d.h. in Bezug auf Schwingungen um eine Fahrzeugquerachse (Y-Achse) positiv beeinflusst werden, so dass die Akustik und insbesondere der Komfort verbessert werden können. Die zusätzliche Abstützung des Hinterachsmoduls in seinem vorderen Bereich bewirkt ferner eine Entlastung der mittleren Hinterachsträgerlager, so dass diese geringer dimensioniert werden können gegenüber der aus dem Stand der Technik bekannten Anbindung des Hinterachsmoduls nur über insgesamt vier Lager.

Vorzugsweise werden die mittleren Hinterachsträgerlager, insbesondere die mittleren und die hinteren Hinterachsträgerlager, von einem konventionellen Fahrzeug, d.h. von einem nur mittels eines Verbrennungsmotors angetriebenen Fahrzeug, für die Hybridvariante übernommen. Das bedeutet, dass trotz des hohen, zusätzlichen Gewichts durch die Komponenten zur Speicherung elektrischer Energie die Hinterachsträgerlager nicht größer dimensioniert werden müssen. Infolgedessen können weitere Bauteile, welche die Anbindung an den Fahrzeug-Aufbau betreffen, wie beispielsweise die Lageraufnahmen am Fahrzeug-Aufbau oder am Hinterachsträger ebenfalls übernommen werden. Ferner ist für ein Hybridfahrzeug kein erhöhter Bauraumbedarf für die Hinterachsträgerlager erforderlich gegenüber einem konventionellen Fahrzeug.

Durch das im Hinterachsmodul integrierte Gehäuse können darin aufgenommene Komponenten schnell und einfach in das Fahrzeug integriert bzw. am Fahrzeug-Aufbau angeordnet werden. Ferner wird der zur Verfügung stehende Bauraum optimal genutzt. Durch die Möglichkeit, das Gehäuse auch zur Aufnahme radführender Lenker oder anderer entsprechender Bauteile auszubilden, können die Anbindungspunkte bei der Hybridvariante geometrisch identisch zum konventionellen Fahrzeug angeordnet werden, was die Übernahme einer Vielzahl von Bauteilen ermöglicht und damit die Wirtschaftlichkeit der Hybridvariante erhöht.

Bevorzugt sind die beiden zusätzlichen vorderen Lager dabei im Bereich einer Vorderkante oder unmittelbar an der Vorderkante des Gehäuses bzw. des Hinterachsmoduls angeordnet. Bevorzugt sind diese Lager dabei derart ausgebildet und am Gehäuse angeordnet, dass sie von unten am Fahrzeug-Aufbau, insbesondere der Fahrzeug-Karosserie angebunden werden können, d.h. dass sie sich von unten am Fahrzeug-Aufbau abstützen können.

In einer besonders bevorzugten Ausgestaltung der Erfindung ist das Hinterachsmodul über die zwei zusätzlichen vorderen Lager in einem Bereich eines Fußraums, insbesondere eines hinteren Fußraums, d.h. insbesondere im Bereich des Fußraums im Fond, am Fahrzeug-Aufbau angebunden, insbesondere in einem Fersenbereich des hinteren Fußraums. Dabei wird als Fersenbereich der Bereich am Fahrzeug-Aufbau bzw. an der Fahrzeug-Karosserie des hinteren Fußraums bezeichnet, der die Fersen bzw. die Füße eines Fondpassagiers in normaler Sitzposition umgibt, d.h. der entsprechende Teil des Bodens des hinteren Fußraums sowie die Rückwand des Fußraums unterhalb der Sitzbank, in welchem ein Fondpassagier seine Füße abstellt. Bei einem Fahrzeug ohne Fond, beispielsweise bei einem zwei-sitzigen Fahrzeug, erfolgt die Anbindung des Hinterachsmoduls am Fahrzeug-Aufbau bzw. der Fahrzeug-Karosserie bevorzugt dementsprechend in einem hinteren bzw. rückwärtigen Bereich eines vorderen Fußraums, d.h. entsprechend im hinteren bzw. rückwärtigen Bereich eines Fahrer- bzw. Beifahrerfußraums hinter den Sitzen.

In einer Weiterbildung der Erfindung sind die zwei zusätzlichen, vorderen, am Gehäuse angeordneten Lager, über die das Hinterachsmodul im vorderen Bereich zusätzlich am Fahrzeug-Aufbau angebunden ist, Elastomerlager. Dabei sind die Elastomerlager vorzugsweise in z-Richtung, d.h. entlang der Fahrzeug-Hochachse, mindestens dreimal so steif ausgebildet sind wie in x-Richtung, d.h. in Fahrzeuglängsrichtung. Insbesondere weisen die beiden vorderen zusätzlichen Lager Steifigkeiten in x-, y- und z-Richtung in einem Verhältnis von x:y:z = 2 : 5: 7 auf. Dieses Verhältnis hat sich im Hinblick auf den Zielkonflikt aus Akustik, Komfort und Fahrdynamik als besonders vorteilhaft herausgestellt.

In einer Weiterbildung der Erfindung weist das Gehäuse eine Oberschale und eine Unterschale auf, wobei eine Trennfuge zwischen der Gehäuse-Oberschale und der Gehäuse-Unterschale in einem montierten Zustand des Gehäuses und in einem am Fahrzeug-Aufbau angeordneten Zustand des Hinterachsmoduls vorzugsweise entgegen einer Fahrzeuglängsrichtung von vorne oben schräg nach hinten unten durch das Gehäuse verläuft.

Dadurch können im Fall eines Gehäuses aus Guss, d.h. einer Gehäuse-Oberschale aus Guss und einer Gehäuse-Unterschale aus Guss, die vorzuhaltenden Gussschrägen, die nach dem Gießen zum Entformen erforderlich sind, in etwa gleichmäßig auf beide Gehäuse-Schalen verteilt werden, wodurch das Innenvolumen des Gehäuses vergrößert werden kann, so dass mehr Bauraum für die im Gehäuse anzuordnenden Komponenten zur Verfügung steht.

In einer bevorzugten Ausgestaltung sind die mittleren Hinterachsträgerlager in das Gehäuse integriert, vorzugsweise im mittleren Bereich des Hinterachsmoduls, insbesondere im Verbindungsbereich oder einem unmittelbar daran angrenzenden Bereich. Dabei sind die mittleren Hinterachsträgerlager bei einem Gehäuse mit Gehäuse-Oberschale und Gehäuse-Unterschale bevorzugt in die Gehäuse-Oberschale integriert. In diesem Fall hat der vorstehend beschriebene Verlauf der Trennfuge den weiteren Vorteil, dass die Trennfuge nicht durch die Lageraufnahmen der mittleren Hinterachsträgerlager verläuft, sondern daran vorbei.

In einer bevorzugten Ausgestaltung der Erfindung ist das Gehäuse katamaranartig ausgebildet ist und weist zwei im Wesentlichen parallel zur Fahrzeuglängsrichtung angeordnete Gehäuse-Rümpfe auf, wobei jeweils im vorderen Bereich eines Gehäuse-Rumpfs eines der beiden vorderen zusätzlichen Lager angeordnet ist.

Bevorzugt sind die Gehäuse-Rümpfe dabei im vorderen Bereich und/oder im mittleren Bereich des Hinterachsmoduls miteinander verbunden. Zur Verbindung der Gehäuse-Rümpfe im vorderen Bereich sind vorzugsweise ein oder mehrere sich quer zur Fahrzeuglängsrichtung erstreckende und im Wesentlichen vertikal angeordnete Bleche vorgesehen, während vorzugsweise zur Verbindung der Gehäuse-Rümpfe im mittleren Bereich bzw. an deren hinteren Enden ein vorderer Querträger des Hinterachsträgers vorgesehen ist.

Diese und weitere Merkmale gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird.

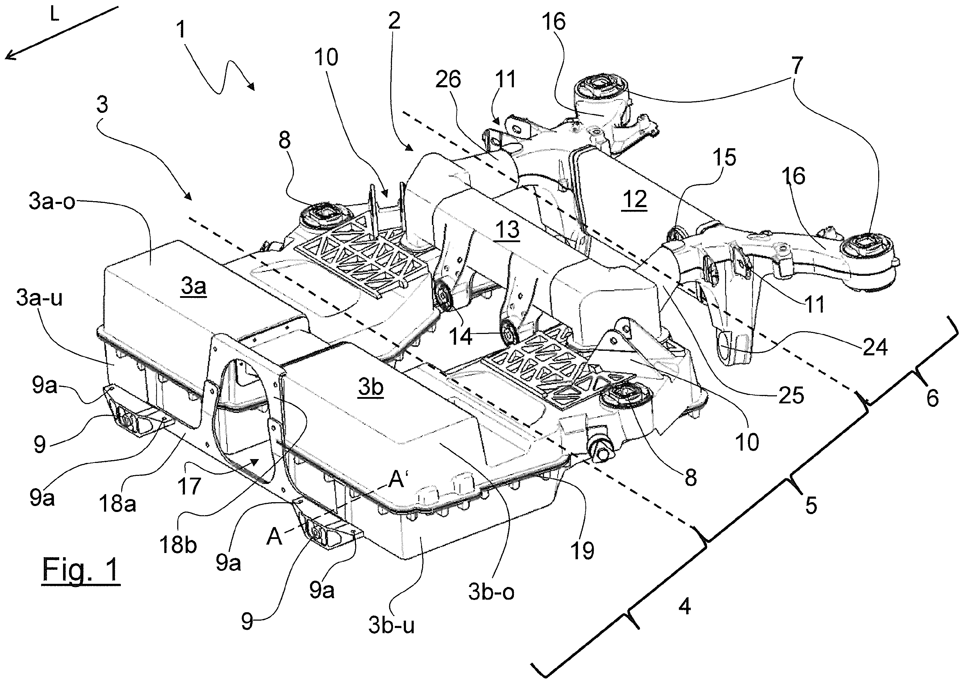

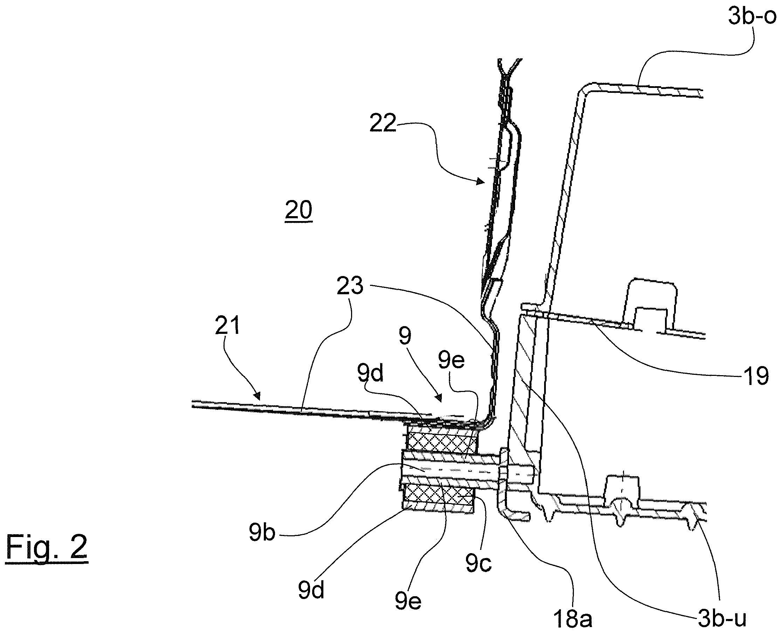

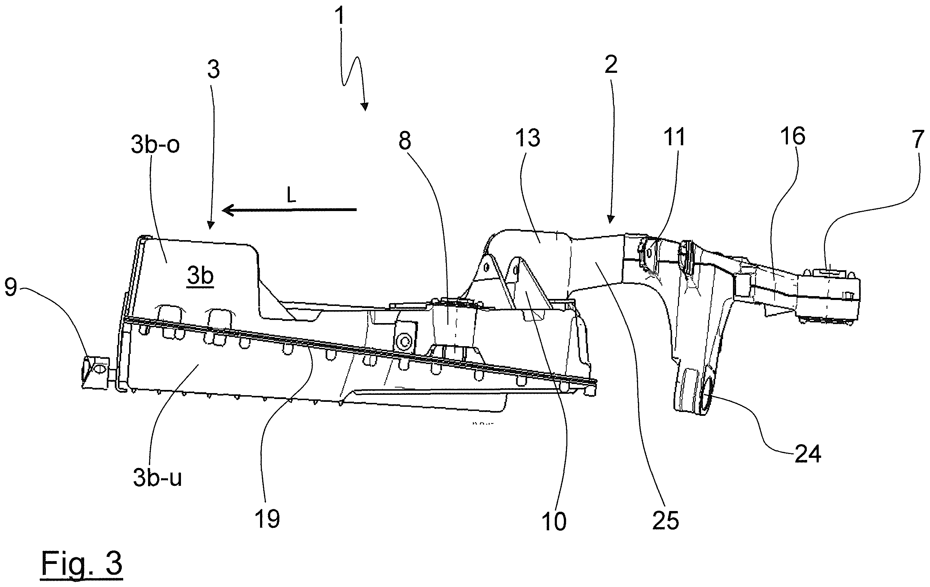

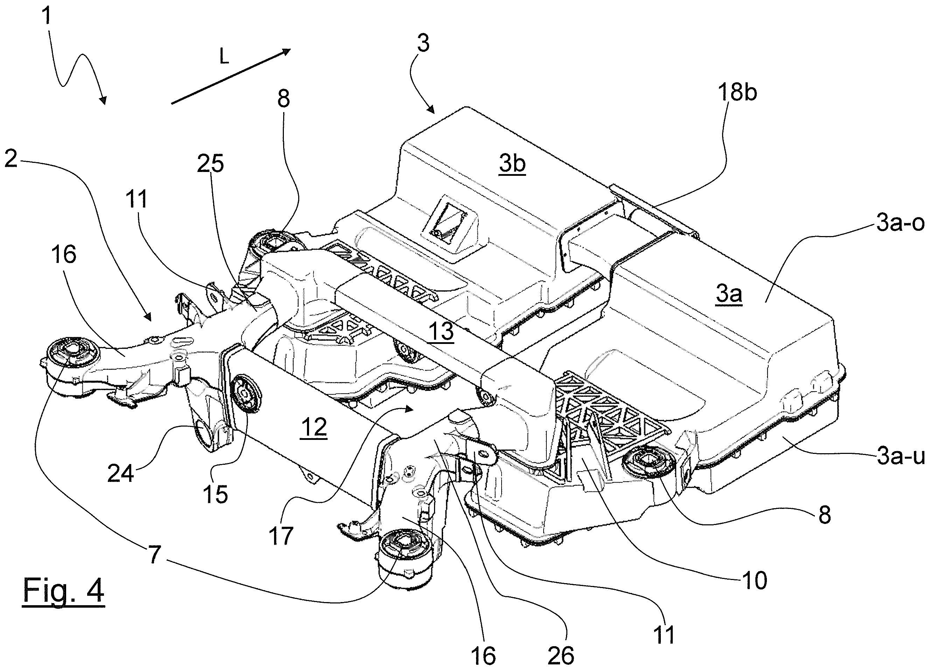

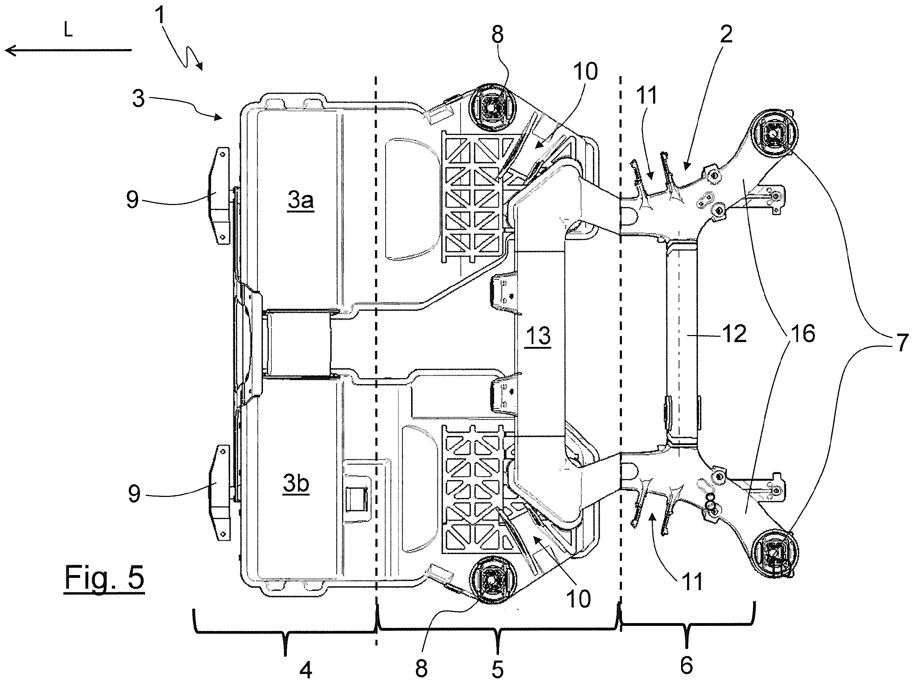

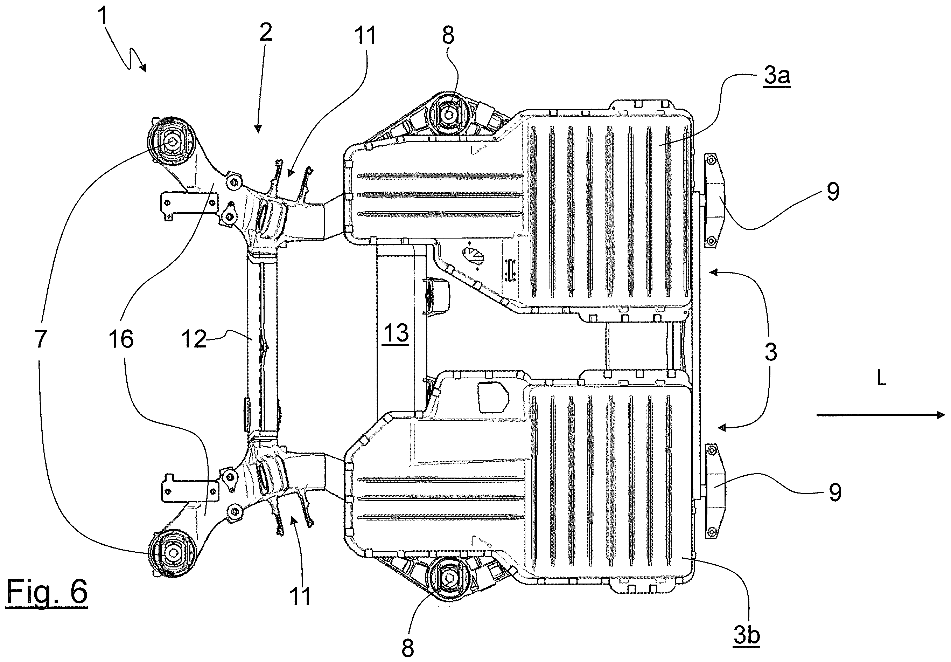

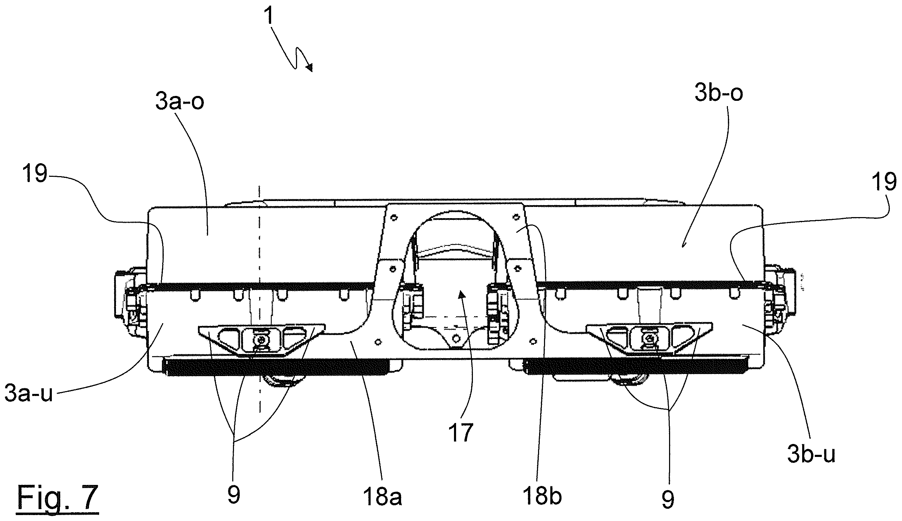

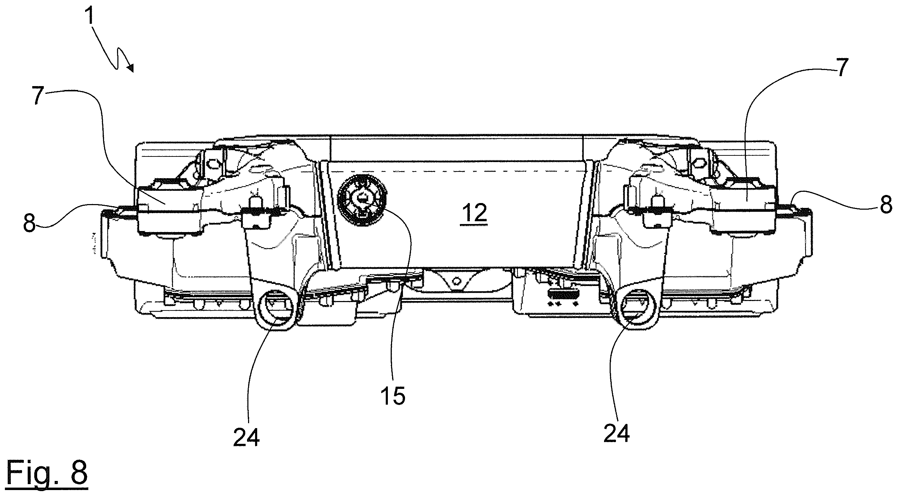

Im Folgenden wird die Erfindung anhand eines bevorzugten Ausführungsbeispieles weiter erläutert, wobei die Erfindung dazu in den beigefügten Zeichnungen schematisch dargestellt ist. **Fig. 1** zeigt ein erstes Ausführungsbeispiel eines erfindungsgemäßen Hinterachsmoduls in perspektivischer Darstellung, **Fig. 2** zeigt in Schnittdarstellung einen Ausschnitt einer erfindungsgemäßen Anordnung eines erfindungsgemäßen Hinterachsmoduls am Fahrzeug-Aufbau, **Fig. 3** das erfindungsgemäße Hinterachsmodul aus Fig. 1 in einer Seitenansicht von links und die **Fig. 4** bis **8** das erfindungsgemäße Hinterachsmodul in verschiedenen Darstellungen, wobei **Fig. 4** eine andere perspektivische Darstellung zeigt, **Fig. 5** eine Ansicht von oben, **Fig. 6** eine Ansicht von unten, **Fig. 7** eine Ansicht von vorne und **Fig. 8** eine Ansicht von hinten.

**Fig. 1** zeigt ein erfindungsgemäßes Hinterachsmodul 1 für einen Fahrzeug-Aufbau eines Hybridfahrzeugs, d.h. eines Fahrzeugs, das zumindest teilweise mittels eines Elektromotors angetrieben werden kann. Dieses erfindungsgemäße Hinterachsmodul 1 weist einen Hinterachsträger 2 auf mit einem Hilfsrahmen, der zwei Querträger 12 und 13 sowie zwei Längsträger 25, 26 umfasst. Der Hinterachsträger 2 bildet dabei einen hinteren Bereich 6 des Hinterachsmoduls 1, bezogen auf eine Fahrzeuglängsrichtung L. Ein vorderer Bereich 4 des Hinterachsmoduls 1 wird von einem Gehäuse 3 gebildet, wobei das Gehäuse 3 und der Hinterachsträger 2 in einem Verbindungsbereich, der ein Teil eines mittleren Bereichs 5 des Hinterachsmoduls 1 ist, miteinander verbunden sind.

Der Hinterachsträger 1 ist zur Befestigung radführender Lenker ausgebildet und weist dazu entsprechende Lagerlaschen 11 bzw. entsprechende LagerAufnahmen 24 auf, wobei die Lagerlaschen 11 in diesem Fall zur Anbindung eines Querlenkers vorgesehen sind und die Aufnahmen 24 für die Anbindung eines Sturzlenkers.

Zur Anbindung des Hinterachsmoduls 1 an einem Fahrzeug-Aufbau weist der Hinterachsträger 2 bei diesem Ausführungsbeispiel zwei hintere, sich in Fahrzeuglängsrichtung L nach hinten und außen erstreckende Tragarme 16 auf, an deren äußeren Enden zwei hintere, zylindrische Hinterachsträgerlager 7 angeordnet sind, die in Fahrzeuglängsrichtung L hydraulisch bedämpft sind und über die das Hinterachsmodul 1 am Fahrzeugaufbau angebunden werden kann bzw. bei einer erfindungsgemäßen Anordnung angebunden ist.

Des Weiteren weist bei dem dargestellten Ausführungsbeispiel das Hinterachsmodul 1 ein Gehäuse 3 aus Aluminium-Druckguss auf, dass zwei Gehäuse-Rümpfe 3a und 3b umfasst, welche jeweils eine Gehäuse-Oberschale 3a-o bzw. 3b-o und eine Gehäuse-Unterschale 3a-u bzw. 3b-u aufweisen.

Die beiden Gehäuse-Rümpfe 3a und 3b sind L-förmig ausgebildet und im Wesentlichen parallel zur Fahrzeuglängsrichtung L bzw. katamaranartig angeordnet, wobei in der Mitte zwischen den beiden Gehäuse-Rümpfen 3a, 3b ein Bauraum-Vorhalt 17 vorhanden ist für eine Abgasanlage und/oder eine Gelenkwelle, wobei die Gehäuse-Rümpfe 3a, 3b in einem montierten Zustand jeweils wie ein auf dem Rücken liegendes L mit der Unterseite nach vorne im Hinterachsmodul angeordnet sind, so dass in den dadurch ausgesparten Bereichen oberhalb der Gehäuse-Rümpfe 3a, 3b Bauraum für eine Fond-Sitzbank, d.h. eine Rücksitzbank, vorhanden ist.

Die Gehäuse-Schalen 3a-o bzw. 3b-o und 3a-u bzw. 3b-u sind dabei entlang einer Trennfuge 19 miteinander verbunden, insbesondere verschraubt. Zur exakten Positionierung der Gehäuse-Schalen 3a-o bzw. 3b-o und 3a-u bzw. 3b-u zueinander können im Flanschbereich entsprechende Passstifte vorgesehen sein. Das Gehäuse 3 bzw. die beiden Gehäuse-Rümpfe 3a und 3b sind ebenfalls zur Befestigung radführenden Lenker ausgebildet und weisen dazu entsprechende Lagerlaschen 10 auf, wobei die Lagerlaschen 10 in diesem Fall zur Anbindung eines Führungslenkers vorgesehen sind, d.h. eines ein Hinterrad führenden Querlenkers.

Zur Erhöhung der Stabilität bzw. der Steifigkeit des Hinterachsmoduls 1 bzw. des Gehäuses 3 sind die beiden Gehäuse-Rümpfe im vorderen Bereich 4 und in einem mittleren Bereich 5 miteinander verbunden, wobei die beiden Gehäuse-Rümpfe 3a, 3b im vorderen Bereich 4 an ihrer Vorderkante durch eine zweiteiliges Blech 18a, 18b, das im Folgenden als Verbindungstraverse 18a, 18b bezeichnet wird, miteinander verbunden sind.

Im mittleren Bereich 5 des Hinterachsmoduls ist der Hinterachsträger 2 an den Enden des vorderen Querträgers 13 mit dem Gehäuse 3, insbesondere mit den hinteren Enden der Gehäuse-Rümpfe 3a, 3b, verbunden. In diesem mittleren Bereich 5 sind zwei mittlere Hinterachsträgerlager 8 in das Gehäuse 3 des Hinterachsmoduls integriert, genauer jeweils in die Gehäuse-Oberschalen 3a-o bzw. 3b-o der Gehäuse-Rümpfe 3a bzw 3b, was besonders vorteilhaft ist, denn somit verläuft die Trennfuge 19 nicht durch die Lageraufnahmen für die mittleren Hinterachsträgerlager 8.

Der Hinterachsträger 2 ist ferner zur Aufnahme bzw. Lagerung eines hier nicht dargestellten Hinterachsgetriebes ausgebildet und weist am vorderen Querträger 13 zwei vordere Hinterachsgetriebe-Lageraufnahmen 14 auf sowie eine am hinteren Querträger 12 angeordnete hintere Hinterachsgetriebe-Lageraufnahme 15, so dass eine Drei-Punkt-Lagerung des Hinterachsgetriebes möglich ist. Die Lageranbindung erfolgt dabei aus Akustik und Komfortgründen bevorzugt ebenfalls über elastische Lager, insbesondere über Gummilager bzw. Elastomerlager.

Das Hinterachsmodul 1 weist erfindungsgemäß zusätzlich zwei vordere, im vorderen Bereich 4 des Hinterachsmoduls 1 angeordnete Lager 9 auf, über welche das Hinterachsmodul 1 am Fahrzeug-Aufbau angebunden werden kann. Bei diesem Ausführungsbeispiel sind die beiden Lager 9 an einer Vorderkante des Gehäuses 3 bzw. der Gehäuse-Rümpfe 3a und 3b, genauer jeweils an der Vorderseite der Gehäuse-Unterschalen 3a-u bzw. 3b-u angeordnet. Die beiden Lager 9 sind bei diesem Ausführungsbeispiel dabei jeweils über eine in der Mitte angeordnete, in etwa waagerecht verlaufende, nicht erkennbar dargestellte Schraubverbindung am Hinterachsmodul 1, bzw. wie vorstehend beschrieben am Gehäuse 3 des Hinterachsmoduls 1, befestigt. Für die Anbindung am Fahrzeug-Aufbau bzw. der Fahrzeug-Karosserie ist ebenfalls eine Schraubverbindung vorgesehen. Dazu weist in diesem Fall jedes Lager 9 zwei Verschraubungspunkte 9a auf, wobei diese Verschraubungen in etwa senkrecht verlaufen, d.h. ausgehend von den Lagern 9 nach oben, denn bei diesem Ausführungsbeispiel wird das Hinterachsmodul 1 an allen sechs Anbindungspunkten 7, 8 und 9 von unten an den Fahrzeug-Aufbau bzw. die Fahrzeug-Karosserie angebunden bzw. von unten mit dem Fahrzeug-Aufbau verbunden bzw. von unten am Fahrzeug-Aufbau befestigt. Wie in Fig. 1 gut erkennbar ist, sind die zwei zusätzlichen, vorderen Elastomerlager 9 trapezförmig ausgebildet, wobei die Lager 9 jeweils mit ihrer Basisseite, also der längeren der beiden Grundseiten, nach oben, d.h. zum Fahrzeug-Aufbau hin, angeordnet sind. Dadurch kann eine verbesserte Abstützung am Fahrzeug-Aufbau erreicht werden. Bei diesem Ausführungsbeispiel weisen die beiden Elastomerlager 9 dabei jeweils Steifigkeiten in x-Richtung (Fahrzeuglängsrichtung L) von ca. 200 N/mm, in y-Richtung (Fahrzeugquerrichtung) von ca. 500 N/mm und in z-Richtung (Fahrzeughochrichtung) von ca. 700 N/mm auf, d.h. in einem Verhältnis von x : y : z = 2 : 5 : 7, wobei die Steifigkeit in z-Richtung mehr als das Dreifache der Steifigkeit in x-Richtung beträgt. Dieses Steifigkeitsverhältnis hat sich in Bezug auf den Zielkonflikt hinsichtlich Akustik, Fahrdynamik und Komfort als besonders vorteilhaft herausgestellt.

Fig. 2 zeigt einen Ausschnitt einer Schnittdarstellung entlang des Schnitts A-A' (vgl. Fig. 1) durch das linke, vordere zusätzliche Lager 9 einer erfindungsgemäßen Anordnung eines Hinterachsmoduls 1 am Fahrzeug-Aufbau, wobei in dieser Darstellung die Ausgestaltung der Anbindung des Hinterachsmoduls 1 bzw. des Gehäuses 3 am Fahrzeug-Aufbau am Beispiel des linken vorderen Lagers 9 gezeigt ist. Das rechte, zusätzliche vordere Lager 9 ist entsprechend ausgebildet und auch entsprechend am Gehäuse 3 bzw. dem Fahrzeug-Aufbau befestigt.

Das Lager 9 ist, wie vorstehend bereits erläutert worden ist, ein Elastomerlager, das ein außen liegendes Lagergehäuse 9d, eine Innenbuchse 9e sowie dazwischen angeordneten Gummi bzw. ein Elastomer 9c aufweist. Das Lager 9 ist dabei über die untere Verbindungstraverse 18a am Gehäuse 3, genauer an der Gehäuse-Unterschale 3b-u, angebunden bzw. befestigt. Die Befestigung erfolgt dabei mittels einer Schraubverbindung, wobei in dieser Darstellung nur der Schraubenvorhalt 9b gezeigt ist, die Schraube selber nicht.

Ferner ist das Lager 9 über die in dieser Darstellung nicht erkennbaren Verschraubungspunkte 9a (vgl. Fig. 1) am Fahrzeug-Aufbau angebunden. Bei dem gezeigten Ausführungsbeispiel ist das Lager 9 an einem sogenannten "Fersenblech" 23, d.h. an einem einen hinteren Fußraum 20 nach hinten und insbesondere nach unten begrenzenden Blech bzw. an einem entsprechenden Blechzusammenbau, d.h. an einem aus mehreren Blechen gebildeten "Fersenblech", beispielsweise mit zusätzlichen Verstärkungsblechen, angebunden bzw. befestigt. Das "Fersenblech" 23 bildet dabei eine Rückwand 22 des hinteren Fußraums 20 sowie den Boden 21 dieses Fußraums 20. Das Lager 9 ist dabei von unten am "Fersenblech" 23 befestigt, wobei das "Fersenblech" 23 mit seiner Unterseite auf dem Lager 9, genauer auf der längeren, nach oben angeordneten Grundseite des trapezförmigen Lagers 9, aufliegt.

Fig. 3 zeigt das erfindungsgemäße Hinterachsmodul aus Fig. 1 in einer Ansicht von links bezogen auf die Fahrzeuglängsrichtung L. In dieser Darstellung ist der Verlauf der Trennfuge 19 von vorne schräg nach hinten unten im Gehäuse 3 bzw. in dem Gehäuse-Rumpf 3b gut erkennbar. Insbesondere ist gut erkennbar, dass die Trennfuge 19 nicht durch das mittlere Hinterachsträgerlager 8 verläuft, sondern dieses vollständig in der Gehäuse-Oberschale 3b-o integriert ist. Dieser Verlauf der Trennfuge 19 ist ferner vorteilhaft in Bezug auf den für die Gussschrägen der Gehäuse-Schalen vorzuhaltenden Bauraum, was vorstehend bereits erläutert worden ist.

Des Weiteren sind das linke, vordere zusätzliche Lager 9 sowie die linke Lagerlasche 10 am Gehäuse-Rumpf 3b zur Befestigung radführender Lenker, die linke Lagerlasche 11 am Hinterachsträger 2 zur Befestigung weiterer radführender Lenker, die linke Aufnahme 24, die ebenfalls zur Befestigung eines radführenden Lenkers ausgebildet ist sowie das linke, hintere Hinterachsträgerlager 7, das am hinteren bzw. hinteren äußeren Ende des Hinterachsträgers 2 angeordnet ist, insbesondere im Eckbereich des Tragarms 16, gut zu erkennen.

Zum besseren Verständnis zeigt Fig. 4 das erfindungsgemäße Hinterachsmodul 1 aus den Fig. 1 und 3 zusätzlich in einer anderen perspektivischen Darstellung und Fig. 5 eine Ansicht von oben, wobei in Fig. 5 die drei Bereiche 4, 5 und 6, d.h. der vordere Bereich 4, der mittlere Bereich 5 und der hintere Bereich 6 des Hinterachsträgermoduls 1 gut zu erkennen sind. Die Unterteilung bzw. Trennung in diese drei Bereiche 4, 5 und 6 ist dabei nicht so zu verstehen, dass das Hinterachsmodul 1 der Länge nach in drei gleichmäßig lange bzw. breite Bereiche einzuteilen ist, vielmehr kann insbesondere der mittlere Bereich 5 sich in Fahrzeuglängsrichtung L mehr oder weniger weit erstrecken. Der vordere Bereich 4 ist dabei definiert als der Bereich, der in einem am Fahrzeug-Aufbau montierten Zustand des Hinterachsmoduls 1 in Vorwärtsfahrtrichtung in Fahrzeuglängsrichtung L am weitesten vorne liegt und der die Vorderkante des Hinterachsmoduls bildet. Der hintere Bereich 6 ist entsprechend der am weitesten hinten liegende Bereich. Der mittlere Bereich 5 ist der Bereich, der sich als dazwischen, d.h. in Fahrzeuglängsrichtung L zwischen dem vorderen 4 und dem hinteren Bereich 6, liegender Bereich daraus ergibt. Insbesondere ist ein Verbindungsbereich, in welchem der Hinterachsträger 2 mit dem Gehäuse 3 verbunden ist, im mittleren Bereich 5 angeordnet.

Fig. 6 zeigt das erfindungsgemäße Hinterachsmodul 1 aus den Fig. 1, 3, 4 und 5 der Vollständigkeit halber in einer Ansicht von unten und Fig. 7 in einer Ansicht von vorne, wobei in Fig. 7 insbesondere der Bauraum-Vorhalt 17 in der Verbindungstraverse unten 18a und oben 18b sowie zwischen den beiden Gehäuse-Rümpfen 3a, 3b für die Abgasanlage bzw. die Gelenkwelle gut erkennbar ist. Fig. 8 zeigte Vollständigkeit halber noch eine Ansicht von hinten auf das erfindungsgemäße Hinterachsmodul 1 aus den Fig. 1 und 3 bis 7.

Selbstverständlich ist eine Vielzahl an Abwandlungen, insbesondere von konstruktiven Abwandlungen, zu dem erläuterten Ausführungsbeispiel möglich, ohne den Inhalt der Patentansprüche zu verlassen.

### Bezuqszeichenliste:

- 1: Hinterachsmodul
- 2: Hinterachsträger
- 3: Gehäuse
- 3a, 3b: Gehäuse-Rumpf
- 3a-o, 3b-o: Gehäuse-Oberschale
- 3a-u, 3b-u: Gehäuse-Unterschale
- 4: vorderer Bereich des Hinterachsmoduls
- 5: mittlerer Bereich des Hinterachsmoduls
- 6: hinterer Bereich des Hinterachsmoduls
- 7: hintere Hinterachsträgerlager
- 8: mittlere Hinterachsträgerlager
- 9: vordere, zusätzliche Lager
- 9a: Verschraubungspunkte des Lagers 9
- 9b: Schraubenvorhalt
- 9c: Gummi/Elastomer des Lagers 9
- 9d: Lagergehäuse des Lagers 9
- 9e: Innenbuchse des Lagers 9
- 10: Lagerlasche am Gehäuse (für Führungslenker)
- 11: Lagerlasche am Hinterachsträger (für Querlenker)
- 12: Querträger hinten
- 13: Querträger vorne
- 14: vordere Hinterachsgetriebe-Lager
- 15: hinteres Hinterachsgetriebe-Lager
- 16: Tragarm
- 17: Bauraum-Vorhalt
- 18a: Verbindungstraverse unten
- 18b: Verbindungstraverse oben
- 19: Trennfuge
- 20: hinterer Fußraum
- 21: Boden des hinteren Fußraums
- 22: Rückwand des hinteren Fußraums
- 23: Fersenblech
- 24: Lageraufnahme (für Sturzlenker)
- 25: Längsträger links
- 26: Längsträger rechts

## Patentansprüche

1. Anordnung eines Hinterachsmoduls (1) an einem Fahrzeug-Aufbau für ein zumindest teilweise mittels eines Elektromotors elektrisch antreibbares, zweiachsiges, zweispuriges Fahrzeug, wobei das Hinterachsmodul (1) einen zur Befestigung radführender Lenker einer Hinterachse ausgebildeten Hinterachsträger (2) und ein Gehäuse (3) zur Aufnahme von Komponenten zur Bereitstellung elektrischer Energie aufweist, wobei das Gehäuse (3) bezogen auf einen am Fahrzeug-Aufbau angeordneten Zustand in einem vorderen Bereich des Hinterachsmoduls (1) angeordnet ist und am Hinterachsträger (2) befestigt ist oder einen Bestandteil des Hinterachsträgers (2) bildet, und wobei das Hinterachsmodul (1) über zwei, in Bezug auf die Fahrtrichtung hintere, in einem hinteren Endbereich (6) des Hinterachsmoduls (1) angeordnete Hinterachsträgerlager (7), und zwei mittlere, in einem mittleren Bereich (5) des Hinterachsmoduls (1) angeordnete Hinterachsträgerlager (8) von unten am Fahrzeug-Aufbau angebunden ist, **dadurch gekennzeichnet, dass** das Hinterachsmodul (1) zusätzlich über zwei vordere, im vorderen Bereich (4) des Hinterachsmoduls (1) am Gehäuse (3) angeordnete Lager (9) am Fahrzeug-Aufbau angebunden ist.

2. Anordnung nach Anspruch 1, **dadurch gekennzeichnet, dass** das Hinterachsmodul (1) über die zwei zusätzlichen vorderen Lager (9) in einem Bereich eines hinteren Fußraums (20) am Fahrzeug-Aufbau angebunden ist.

3. Anordnung nach Anspruch 1 oder 2, **dadurch gekennzeichnet, dass** die zwei zusätzlichen, vorderen, am Gehäuse (3) angeordneten Lager (9) Elastomerlager sind, wobei die Steifigkeit der Elastomerlager (9) in z-Richtung mindestens das Dreifache der Steifigkeit in x-Richtung beträgt und die Steifigkeiten in x-, y- und z-Richtung ein Verhältnis von x:y:z = 2 : 5: 7 zueinander aufweisen.

4. Anordnung nach einem der vorangegangenen Ansprüche, **dadurch gekennzeichnet, dass** das Gehäuse (3) eine Oberschale (3a-o, 3b-o) und eine Unterschale (3a-u, 3b-u) aufweist, wobei eine Trennfuge (19) zwischen der Gehäuse-Oberschale (3a-o, 3b-o) und der Gehäuse-Unterschale (3a-u, 3b-u) in einem montierten Zustand des Gehäuses (3) und in einem am Fahrzeug-Aufbau angeordneten Zustand des Hinterachsmoduls (1) entgegen einer Fahrzeuglängsrichtung (L) von vorne oben schräg nach hinten unten durch das Gehäuse (3) verläuft.

5. Anordnung nach einem der vorangegangenen Ansprüche, **dadurch gekennzeichnet, dass** die mittleren Hinterachsträgerlager (8) in das Gehäuse (3) integriert sind.

6. Anordnung nach einem der vorangegangenen Ansprüche, **dadurch gekennzeichnet, dass** das Gehäuse (3) zwei zumindest annähernd parallel zur Fahrzeuglängsrichtung (L) angeordnete Gehäuse-Rümpfe (3a, 3b) aufweist, wobei vorzugsweise jeweils im vorderen Bereich (4) eines Gehäuse-Rumpfs (3a, 3b) eines der beiden vorderen zusätzlichen Lager (9) angeordnet ist.

7. Hinterachsmodul (1) für eine Anordnung an einem Fahrzeug-Aufbau eines zumindest teilweise mittels eines Elektromotors elektrisch antreibbaren, zweiachsigen, zweispurigen Fahrzeugs, wobei das Hinterachsmodul (1) einen zur Befestigung radführender Lenker einer Hinterachse ausgebildeten Hinterachsträger (2) und ein Gehäuse (3) zur Aufnahme von Komponenten zur Bereitstellung elektrischer Energie aufweist, wobei das Gehäuse (3) bezogen auf einen am Fahrzeug-Aufbau angeordneten Zustand in einem vorderen Bereich (4) des Hinterachsmoduls (1) angeordnet ist und am Hinterachsträger (2) befestigt ist oder einen Bestandteil des Hinterachsträgers (2) bildet, und wobei das Hinterachsmodul (1) über zwei, in Bezug auf die Fahrtrichtung hintere, in einem hinteren Endbereich (6) des Hinterachsmoduls (1) angeordnete Hinterachsträgerlager (7), und zwei mittlere, in einem mittleren Bereich (5) des Hinterachsmoduls (1) angeordnete Hinterachsträgerlager (8) von unten mit dem Fahrzeug-Aufbau verbindbar ist,
**dadurch gekennzeichnet, dass** das Hinterachsmodul (1) zusätzlich über zwei vordere, im vorderen Bereich (4) des Hinterachsmoduls (1) am Gehäuse (3) angeordnete Lager (9) mit dem am Fahrzeug-Aufbau verbindbar ist.

8. Zweiachsiges, zweispuriges, zumindest teilweise mittels eines Elektromotors elektrisch antreibbares Fahrzeug mit einem Hinterachsmodul (1), **dadurch gekennzeichnet, dass** das Hinterachsmodul (1) nach Anspruch 7 ausgebildet ist und gemäß einer Anordnung nach Anspruch 1 im Fahrzeug angeordnet ist.

## Claims

1. An arrangement of a rear axle module (1) on a vehicle body for a two-axle, two-track vehicle that is at least partially electrically driveable by means of an electric motor, wherein the rear axle module (1) has a rear axle support (2) designed for the fastening of wheel-guiding links of a rear axle, and a housing (3) for accommodating components for providing electrical energy, wherein the housing (3), with respect to a state arranged on the vehicle body, is arranged in a front region of the rear axle module (1) and is fastened to the rear axle support (2) or forms part of the rear axle support (2), and wherein the rear axle module (1) is connected from below to the vehicle body via two rear axle support bearings (7), which are to the rear with respect to the direction of travel and are arranged in a rear end region (6) of the rear axle module (1), and two central rear axle support bearings (8) arranged in a central region (5) of the rear axle module (1),
**characterised in that** the rear axle module (1) is additionally connected to the vehicle body via two front bearings (9) arranged on the housing (3) in the front region (4) of the rear axle module (1).

2. An arrangement according to claim 1, **characterised in that** the rear axle module (1) is connected to the vehicle body in a region of a rear foot well (20) via the two additional front bearings (9).

3. An arrangement according to claim 1 or 2, **characterised in that** the two additional front bearings (9) arranged on the housing (3) are elastomer bearings, wherein the stiffness of the elastomer bearings (9) in the z-direction is at least three times the stiffness in the x-direction, and the stiffnesses in the x-, y- and z-direction have a ratio to one another of x:y:z = 2:5:7.

4. An arrangement according to any one of the preceding claims, **characterised in that** the housing (3) has an upper shell (3a-o, 3b-o) and a lower shell (3a-u, 3b-u), wherein a joint (19) between the housing upper shell (3a-o, 3b-o) and the housing lower shell (3a-u, 3b-u), in an assembled state of the housing (3) and in a state of the rear axle module (1) arranged on the vehicle body, runs obliquely downward through the housing (3) from the front to the rear, against a vehicle longitudinal direction (L).

5. An arrangement according to any one of the preceding claims, **characterised in that** the central rear axle support bearings (8) are integrated into the housing (3).

6. An arrangement according to any one of the preceding claims, **characterised in that** the housing (3) has two housing hulls (3a, 3b) arranged at least approximately parallel to the vehicle longitudinal direction (L), wherein the two front additional bearings (9) are preferably arranged one in each front region (4) of the housing hulls (3a, 3b).

7. A rear axle module (1) for an arrangement on a vehicle body of a two-axle, two-track vehicle that is at least partially electrically driveable by means of an electric motor, wherein the rear axle module (1) has a rear axle support (2) designed for the fastening of wheel-guiding links of a rear axle, and a housing (3) for accommodating components for providing electrical energy, wherein the housing (3), with respect to a state arranged on the vehicle body, is arranged in a front region (4) of the rear axle module (1) and is fastened to the rear axle support (2) or forms part of the rear axle support (2), and wherein the rear axle module (1) can be connected from below to the vehicle body via two rear axle support bearings (7), which are to the rear with respect to the direction of travel and are arranged in a rear end region (6) of the rear axle module (1), and two central rear axle support bearings (8) arranged in a central region (5) of the rear axle module (1),
**characterised in that** the rear axle module (1) additionally can be connected to the vehicle body via two front bearings (9) arranged on the housing (3) in the front region (4) of the rear axle module (1).

8. A two-axle, two-track vehicle that is at least partially electrically driveable by means of an electric motor and that has a rear axle module (1), **characterised in that** the rear axle module (1) is configured according to claim 7 and is arranged in the vehicle in accordance with an arrangement according to claim 1.

## Revendications

1. Agencement d'un module d'essieu arrière (1) sur la carrosserie d'un véhicule à deux essieux et à deux lignes de roues pouvant être entraînées au moins partiellement par un moteur électrique, le module d'essieu arrière (1) comprenant un support d'essieu arrière (2) permettant de fixer des bras de suspension guidant les roues de l'essieu arrière et un boîtier (3) destiné à recevoir des composants permettant de fournir de l'énergie électrique, le boîtier (3) étant monté dans la zone avant du module d'essieu arrière (1) en considérant son état monté sur la carrosserie du véhicule et étant fixé sur le support d'essieu arrière (2) ou formant un élément du support d'essieu arrière (2), et le module d'essieu arrière (1) étant attaché par le bas à la carrosserie du véhicule par l'intermédiaire de deux paliers de support d'essieu arrière (7) montés à l'arrière par rapport la direction de déplacement, dans la zone d'extrémité arrière (6) du module d'essieu arrière (1) et de deux paliers de support d'essieu arrière médians (8) montés dans la zone médiane (5) du module d'essieu arrière (1), **caractérisé en ce que** le module d'essieu arrière (1) et en outre attaché à la carrosserie du véhicule par l'intermédiaire de deux paliers avant (9) montés sur le boîtier (3) dans la zone avant (4) du module d'essieu arrière (1).

2. Agencement, conforme à la revendication 1,
**caractérisé en ce que**
le module d'essieu arrière (1) est attaché à la carrosserie du véhicule par l'intermédiaire des deux paliers avant supplémentaires (9) dans la zone de l'espace arrière des pieds (20).

3. Agencement conforme à la revendication 1 ou 2,
**caractérisé en ce que**
les deux paliers supplémentaires avant montés sur le boîtier (3) sont des paliers élastomères (9), et la raideur des paliers élastomères (9) dans la direction z est au moins égale à trois fois leur raideur dans la direction x les raideurs dans les directions x-, y- et z- étant dans un rapport x :y :z = 2 :5 :7.

4. Agencement, conforme à l'une des revendications précédentes,
**caractérisé en ce que**
le boîtier (3) comporte une coque supérieure (3a-o, 3b-o) et une coque inférieure (3a-u, 3b-u), le joint de séparation (19) entre la coque supérieure de boîtier (3a-o, 3b-o) et la coque inférieure de boîtier (3a-u, 3b-u) s'étendant, au travers du boîtier (3) lorsque le boîtier (3) est monté, et lorsque le module d'essieu arrière (1) est monté sur la carrosserie du véhicule à l'opposé de la direction longitudinale (L) du véhicule de l'avant et du haut obliquement vers le bas et l'arrière.

5. Agencement, conforme à l'une des revendications précédentes,
**caractérisé en ce que**,
les paliers de support d'essieu arrière médians (8) sont intégrés dans le carter (3).

6. Agencement, conforme à l'une des revendications précédentes,
**caractérisé en ce que**,
le boîtier (3) comporte deux caissons de boîtier (3a, 3b) montée au moins approximativement, parallèlement à la direction longitudinale (L) du véhicule, et de préférence, dans la zone avant (4) d'un caisson de boîtier (3a, 3b) respectif est monté l'un des deux paliers supplémentaires avant (9).

7. Module d'essieu arrière (1) destiné à être monté sur la carrosserie d'un véhicule à deux essieux et à deux lignes de roues entraîné au moins partiellement électriquement par un moteur électrique, dans lequel le module d'essieu arrière (1) comporte un support d'essieu arrière (2) permettant de fixer des bras de suspensions guidant les roues de l'essieu arrière et un boîtier (3) destiné à recevoir des composants permettant de fournir de l'énergie électrique, le boîtier (3) étant monté, en considérant son état monté sur la carrosserie du véhicule dans la zone avant (4) du module d'essieu arrière (1) et étant fixé sur le support d'essieu arrière (2) ou formant un élément du support d'essieu arrière (2), et le module d'essieu arrière (1) pouvant être attaché par le bas à la carrosserie du véhicule par l'intermédiaire de deux paliers de support d'essieu arrière (7) montés à l'arrière par rapport à la direction de déplacement dans la zone d'extrémité arrière (6) du module d'essieu arrière (1) et de deux paliers de support d'essieu arrière médians (8) montés dans la zone médiane (5) du module d'essieu arrière (1),
**caractérisé en ce que**
le module d'essieu arrière (1) peut en outre être attaché à la carrosserie du véhicule par l'intermédiaire de deux paliers avant (9) montés sur le boîtier (3) dans la zone avant (4) du module d'essieu arrière (1).

8. Véhicule à deux essieux et à deux lignes de roues entraîné au moins partiellement, électriquement par un moteur électrique comportant un module d'essieu arrière (1),
**caractérisé en ce que**
le module d'essieu arrière (1) est réalisé conformément à la revendication 7 et monté sur le véhicule par un agencement conforme à la revendication 1.
